# EUROPEAN PATENT SPECIFICATION

(11) **EP 3 405 946 B1**
(45) Date of publication and mention of the grant of the patent: **03.07.2024**
(21) Application number: 17704577.0
(22) Date of filing: 14.01.2017
(51) Int. Cl.: G10L 15/22

(54) **CONFIGURABLE GENERIC LANGUAGE UNDERSTANDING MODELS**
KONFIGURIERBARE GENERISCHE SPRACHVERSTÄNDNISMODELLE
MODÈLES DE COMPRÉHENSION DE LANGAGE GÉNÉRIQUES CONFIGURABLES

(30) Priority: 22.01.2016 US 201615004324
(43) Date of publication of application: 28.11.2018
(73) Proprietor: Microsoft Technology Licensing, LLC, Redmond, WA 98052-6399 (US)
(72) Inventor: SARIKAYA, Ruhi, Redmond Washington 98052-6399 (US); CELIKYILMAZ, Asli, Redmond Washington 98052-6399 (US); KIM, Young-Bum, Redmond Washington 98052-6399 (US); FEIZOLLAHI, Zhaleh, Redmond Washington 98052-6399 (US); RAMESH, Nikhil, Redmond Washington 98052-6399 (US); SUZUKI, Hisami, Redmond Washington 98052-6399 (US); ROCHETTE, Alexandre, Redmond Washington 98052-6399 (US)
(74) Representative: CMS Cameron McKenna Nabarro Olswang LLP
(86) International application number: PCT/US2017/013584
(87) International publication number: WO 2017/127316

(56) References cited:
- US-A1- 2014 222 422
- US-A1- 2015 301 795
- US-B1- 6 311 150
- DE MORI R ET AL: "Spoken language understanding", IEEE SIGNAL PROCESSING MAGAZINE, IEEE SERVICE CENTER, PISCATAWAY, NJ, US, vol. 25, no. 3, 1 May 2008 (2008-05-01), pages 50-58, XP011226391, ISSN: 1053-5888, DOI: 10.1109/MSP.2008.918413
- Young-Bum Kim ET AL: "Natural Language Model Re-usability for Scaling to Different Domains", Proceedings of the 2016 Conference on Empirical Methods in Natural Language Processing, 1 January 2016 (2016-01-01), pages 2071-2076, XP055363540, Stroudsburg, PA, USA DOI: 10.18653/v1/D16-1222

## Description

### BACKGROUND

Natural language understanding (NLU) is the ability of a computer program to understand human speech and to extract the meaning of spoken or typed input. Typically, NLU systems are configured using statistical data models. High quality models require machine learning expertise, natural language processing expertise, and a substantial amount of application-specific, labeled data. As a result, large collections of data and models for previous applications may not be easily accessible or configured to use for configuring new models.

It is with respect to these and other general considerations that the aspects disclosed herein have been made. Also, although relatively specific problems may be discussed, it should be understood that the examples should not be limited to solving the specific problems identified in the background or elsewhere in this disclosure.
US 6311150 B1 (Ramaswamy et al.) discloses a method for hierarchical translation of input to a formal command in natural language understanding systems. An input command to be translated is presented to a natural language understanding engine, which comprises at least two translator levels. A first translator level of the at least two translator levels translates the input command into at least one category by associating the input command with the at least one category for the next level of translators. A formal language command is output for the input command from a last of the at least two translator levels based on the input command and the at least one category. A method for building hierarchical models is also recited.
US2015/0301795 describes a crowdsourcing based community platform including a natural language configuration system that predicts a user's desired function call based on a natural language input. The system provides a collaboration platform to configure and optimize natural language systems to leverage the work and data of other developers, thus minimizing the time and data required to improve the quality and accuracy. An application developer can provide training data for training a model specific to the developer's application.

Document YOUNG-BUM KIM ET AL - "Natural Language Model Re-usability for Scaling to Different Domains" discloses a web-scale language understanding system, using a single universal slot tagging model instead of a separate model for each domain. The document includes a definition of the concept of "schema" in NLU.

### SUMMARY

Several aspects of the invention provide techniques as set forth in the accompanying claims.

Examples of the present disclosure describe systems and methods of configuring generic language understanding models. In aspects, one or more previously configured schemas for various applications may be identified and collected. A generic schema may be generated using the collected schemas. The collected schemas may be programmatically mapped to the generic schema. The generic schema may be used to train one or more models. An interface may be provided to allow browsing the models. The interface may include a configuration mechanism that provides for selecting one or more of the models. The selected models may be bundled programmatically, such that the information and instructions needed to implement the models are configured programmatically. The bundled models may then be provided to a requestor.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Additional aspects, features, and/or advantages of examples will be set forth in part in the description which follows and, in part, will be apparent from the description, or may be learned by practice of the disclosure.

### BRIEF DESCRIPTION OF THE DRAWINGS

Non-limiting and non-exhaustive examples are described with reference to the following figures.
Figure 1 illustrates an overview of an example system for configuring generic language understanding model techniques as described herein.
Figure 2 illustrates an exemplary input processing unit for configuring generic language understanding models as described herein.
Figure 3 illustrates an example method of configuring generic language understanding models as described herein.
Figure 4 illustrates an example diagram of an interface to interact with as described herein.
Figure 5 is a block diagram illustrating example physical components of a computing device with which aspects of the disclosure may be practiced.
Figure 6A and 6B are simplified block diagrams of a mobile computing device with which aspects of the present disclosure may be practiced.
Figure 7 is a simplified block diagram of a distributed computing system in which aspects of the present disclosure may be practiced.
Figure 8 illustrates a tablet computing device for executing one or more aspects of the present disclosure.

### DETAILED DESCRIPTION

Various aspects of the disclosure are described more fully below with reference to the accompanying drawings, which form a part hereof, and which show specific exemplary aspects. However, different aspects of the disclosure may be implemented in many different forms and should not be construed as limited to the aspects set forth herein; rather, these aspects are provided so that this disclosure will be thorough and complete, and will fully convey the scope of the aspects to those skilled in the art. Aspects may be practiced as methods, systems or devices. Accordingly, aspects may take the form of a hardware implementation, an entirely software implementation or an implementation combining software and hardware aspects. The following detailed description is, therefore, not to be taken in a limiting sense.

The present disclosure describe systems and methods of configuring generic language understanding (LU) models. In aspects, a server device may identify and collect one or more previously configured schemas that were used to build one or models for various applications and/or scenarios. One skilled in the art will recognize that any type of processing device may be utilized with examples of the present disclosure. A schema, as used herein, may refer to a framework for specifying a label type, label, domain, intent, slot or the like for one or more portions of the data. A domain, as used herein, may refer to a container and/or a boundary that isolates or defines an application, software functionality, or a set of data. An intent, as used herein, may refer to the goal or intention of user's utterance or other entered input. A slot, as used herein, may refer to the actionable content within the user's utterance or other entered input. One skilled in the art will recognize that input may be in a form such as voice/utterance, text, handwritten input, and touch, among other examples.

In aspects, the server device may use the collected schemas to generate an abstracted or generic schema. A generic schema, as used herein, may refer to a schema that includes broad or generic data (e.g., label types, labels, domains, intents, slots, etc.) for the label data of one or more other schemas. The collected schemas may then be mapped to the generic labels of the generic schema. In examples, the mapping may be performed manually or programmatically using one or more mapping algorithms or tools. In some aspects, the mapped generic schema may be used to train and/or retrain one or more models. A model, as used herein, may refer to a statistical language model that may be used to determine a probability distribution over one or more word and/or character sequences and/or to predict a response value from one or more predictors. In examples, a model may be a rule-based model, a machine-learned regressor, a machine-learned classifier, or the like. Training a model, as used herein, may refer to using, for example, a set of data (e.g., training set data, test data, validation set data, etc.) to teach a model to find and/or describe predictive relationships. For example, the mapped generic schema may be used to train a model including all or substantially all of the data and/or elements of the one or more schemas used to generate the generic schema. An element, as used herein, may refer to a domain, an intent and/or a slot. In another example, the mapped generic schema may be used to train a plurality of models, where each of the models comprises a single targeted element or a subset of elements from the mapped generic schema.

In aspects, the server device may provide or have access to an interface. The interface may be used to provide access to one or more of the trained models, schemas and/or the schema data. For example, the interface may provide for browsing, manipulating, and/or selecting one or more of the trained models. In examples, the selected models may be manually or programmatically bundled. Bundled, as used herein, may refer to combing one or more selected models and instructions and/or other information used to implement the models on one or more computing devices. In some aspects, the bundled data may be provided or otherwise exposed to, for example, a user, service, and/or third party.

Accordingly, the present disclosure provides a plurality of technical benefits including but not limited to: configuring generic language models and systems; providing an interface for model browsing, manipulation and selection, bundling of specific models (thereby reducing the size of the modeling footprint); improving domain detection, intent detection, and slot tagging; increasing query processing speed; reducing the amount of training data needed to train language understanding models; reducing the time and resource cost required to annotate a domain; reducing the bandwidth and power consumption of the devices within the system and improving efficiency and quality for applications/services utilizing examples of the present disclosure, among other examples.

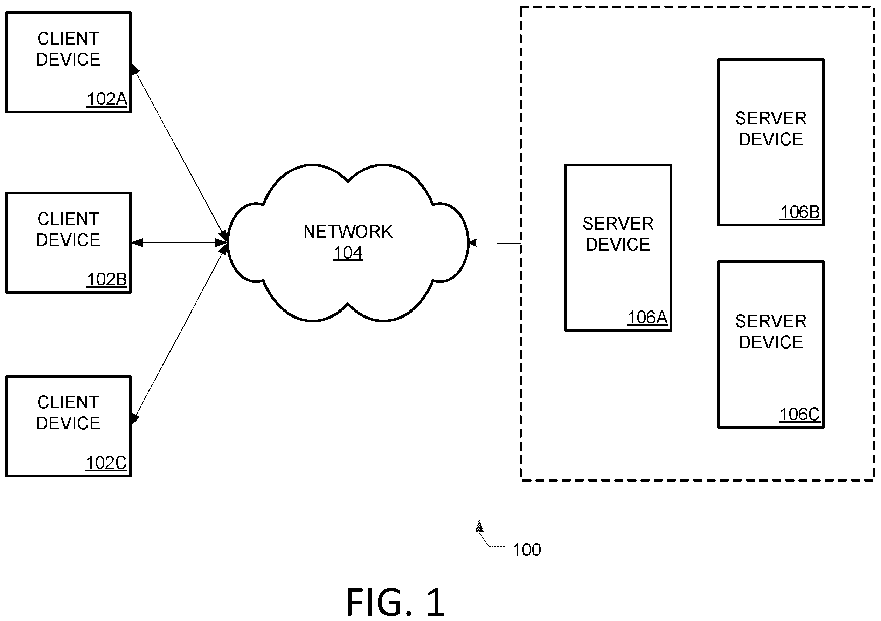

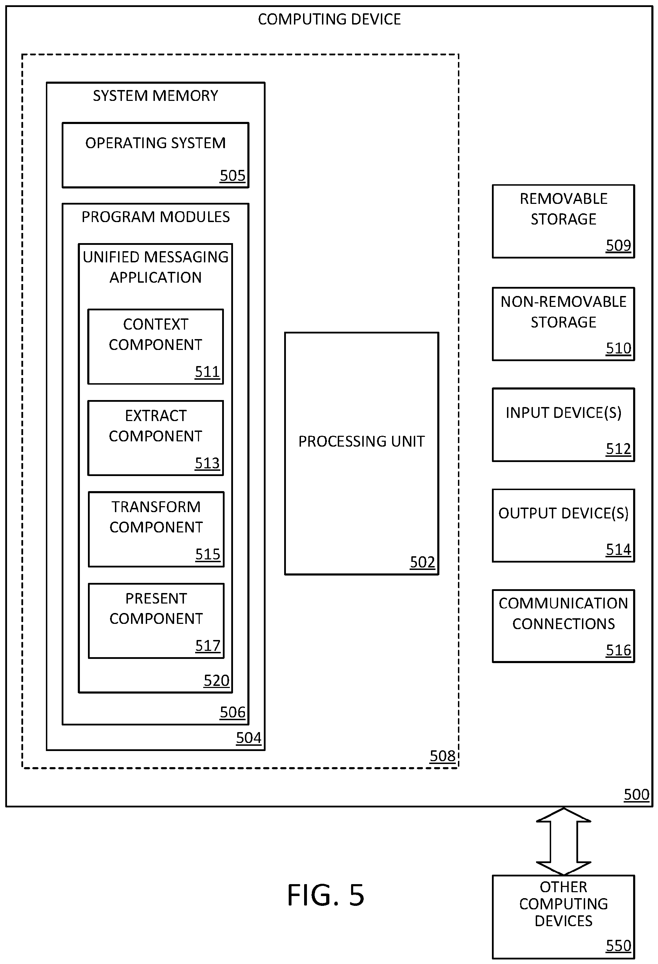

Figure 1 illustrates an overview of an example system for implementing personalization techniques for natural language systems as described herein. Exemplary system 100 presented is a combination of interdependent components that interact to form an integrated whole for personalizing natural language systems. Components of the systems may be hardware components or software implemented on and/or executed by hardware components of the systems. In examples, system 100 may include any of hardware components (e.g., used to execute/run operating system (OS)), and software components (e.g., applications, application programming interfaces (APIs), modules, virtual machines, runtime libraries, etc.) running on hardware. In one example, an exemplary system 100 may provide an environment for software components to run, obey constraints set for operating, and makes use of resources or facilities of the system 100, where components may be software (e.g., application, program, module, etc.) running on one or more processing devices. For instance, software (e.g., applications, operational instructions, modules, etc.) may be run on a processing device such as a computer, mobile device (e.g., smartphone/phone, tablet) and/or any other electronic devices. As an example of a processing device operating environment, refer to the exemplary operating environments depicted in Figures 5-8. In other examples, the components of systems disclosed herein may be spread across multiple devices. For instance, input may be entered on a client device and information may be processed or accessed from other devices in a network such as one or more server devices.

As one example, the system 100 comprises client device 102A, client device 102B, client device 102C, distributed network 104, and a distributed server environment comprising one or more servers, such as server device 106A, server device 106B and server device106C. One of skill in the art will appreciate that the scale of systems such as system 100 may vary and may include more or fewer components than those described in Figure 1. In some examples, interfacing between components of the system 100 may occur remotely, for example where components of system 100 may be spread across one or more devices of a distributed network.

The client device 102A, for example, may be configured to receive user input via a user interface component or other input means. Examples of input may include voice, visual, touch and text input. Client device 102A may be further configured to transmit the input to a server device, such as server device 106A, via distributed network 104. In some examples, client device 102A may receive response data from a server device via the user interface component or a similar interface.

Server device 106A, for example, may be configured to receive and process a data request received from a client device or received directly by the server device. In aspects, processing the data request may include parsing the data request to identify, for example, identifying information for language understanding models and/or schema data corresponding to one or more applications and/or scenarios. Server device 106A may use the identifying information to identify and/or collect schemas and schema data from one or more services, applications and/or data stores. For example, server device 106A may collect schema data from a service on server device 106B, a database on server 106C, and applications on client devices 102B and 102C. In some aspects, the collected schema data may be used to perform schema mapping. For example, the collected schema data may be used to generate a generic schema comprising broad and/or generic slot categories. The collected schema data may then be mapped to the generated generic schema using one or more mapping techniques.

Server device 106A may be further configured to train one or more language understanding models. In aspects, server device 106A may train one or more language understanding models (or cause the models to be trained) using a mapped generic schema as input. For example, server device 106A may train one large model comprising all (or substantially all) of the elements of the generic schema. Alternately, server device 106A may train a plurality of smaller models which respectively comprise a subset of elements of the generic schema. In some aspects, server device 106A may store the trained model(s) in one or more locations accessible to server device 106A.

Server device 106A may be further configured to provide an interface to access the trained models. In aspects, server device 106A may provide a user interface and/or tool to navigate and/or manipulate the trained models. For example, server device 106A may provide an interface tool that allows a user or service to browse and selectively choose models from, for example, a categorized list of models. The selected models may be bundled programmatically into a configuration file or the like. In some aspects, the configuration file may additionally comprise information and instructions that provide for automatically installing and/or implementing the bundled models on a computing device. For example, a user may download a configuration file from server device 106A and the configuration file may automatically install the models, schemas and/or an associated interface on one or more designated computing devices.

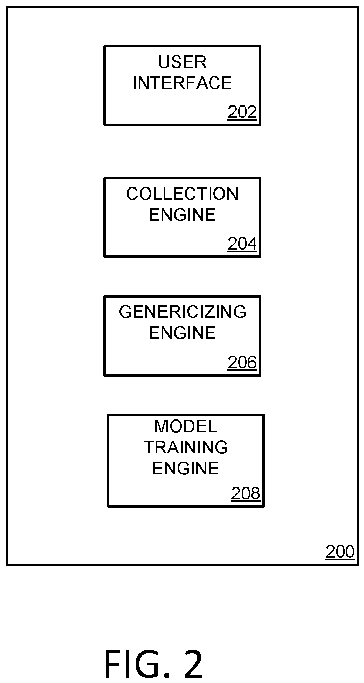

Figure 2 illustrates an overview of an exemplary input processing unit 200 for configuring generic language understanding models as described herein. The modeling configuration techniques implemented by input processing unit 200 may comprise the modeling configuration techniques and input described in Figure 1. In alternative examples, a single system (comprising one or more components such as processor and/or memory) may perform processing described in systems 100 and 200, respectively. Further, input processing unit 200 may comprise a user interface component as described in the description of Figure 1

Exemplary input processing unit 200 may comprise user interface (UI) component 202, collection engine 204, generalizing engine 206, model training engine 208, each having one or more additional components. The UI component 202 may be configured to receive input from a client device via an interface or directly from a user. In aspects, UI component 202 may parse the received input to identify information associated with language understanding models and/or schema data corresponding to one or more applications and/or scenarios. The identified information may include domain data, intent data and/or slot (or entity) data. In a particular example, UI component 202 may additionally identify client device information and/or user information from a requestor. The client device and/or user information may then be associated with the identified model and/or schema data.

Collection engine 204 may be configured to collect models and/or schema data. In aspects, collection engine 204 may access the identified model and/or schema data to form one or more queries or data requests. In examples, the queries may comprise one or more portions of the identified model and/or schema data, and may be transmitted to one or more data sources. In a particular example, collection engine 204 may periodically poll data sources to compile and store a list of available resources at each data source. Collection engine 204 may analyze the list to determine the number and content of queries to transmit to one or more of the data sources. In such an example, the queries may be structured as to minimize the duplication of received model and schema data. In another example, collection engine 204 may identify the data sources to transmit queries when the identified model and/or schema data is accessed (e.g., on demand). In aspects, collection engine 204 may transmit the queries to (or otherwise access data on) the identified data sources. The models, schemas and/or schema data received from the data sources may be stored in a data store accessible to collection engine 204.

Generalizing engine 206 may be configured to generate one or more generic schemas. In aspects, generalizing engine 206 may access and process the stored models, schemas and/or schema data. In examples, processing the model, schema and/or schema data may include, for example, aggregating the data into a single list or table, sorting the data, identifying and removing duplicate entries, and/or grouping the data by one or more schema elements. In some aspects, the processed data may be used to generate one or more generic schemas. For example, the processed data may be converted into low-dimensional vector representations using an algorithm, such as a canonical correlation analysis (CCA) algorithm. CCA, as used herein, is a method of determining relationships between a plurality of multivariate sets of variables (vectors). The vector representations may be clustered into coarse or generic schema elements or element categories using calculations or algorithms, such as the k-means clustering algorithm. *k*-means clustering, as used herein, may refer to an operation of vector quantization that is used in cluster analysis to partition *n* observations into *k* clusters in which each observation belongs to the cluster with the nearest mean. Generalizing engine 206 may then map the generic schema to the stored models, schemas and/or schema data used to generate the generic schema. Generalizing engine 206 may be further configured to provide the mapped generic schema to one or more language understanding model generation components, such as model training engine 208.

Model training engine 208 may be configured to generate and/or train one or more language understanding models. In aspects, model training engine 208 may access and use a mapped generic schema and/or information associated with the mapped generic schema to train one or more language understanding models. In some aspects, a mapped generic schema may be used to train a language understanding model on all (or substantially all) of the elements of the generic schema and related information. For example, the model may include domain classification information (e.g., domain model results, domain confidence data, etc.), intent classification information, slot-tagged output (e.g., features assigned to slots of a query or statement), slot-tag resolution information, etc. for one or more of the collected models and/or schema data. In other aspects, one or more portions of the mapped generic schema may be used to train a plurality of smaller models. For example, a generic schema comprising the domains alarm, calendar and communication may be used to train three separate models (e.g., a domain model, a calendar model and a communication model). The three models may include all, substantially all, or only a subset elements of the generic schema and related information for the respective domains.

Exemplary input processing unit 200 may further include a model navigation utility. In aspects, the model navigation utility may be a separate component of input processing unit 200 or may be part of the functionality of one or more of components 202, 204, 206 and 208. For example, the model navigation utility may be located in or accessible by UI component 202. In some aspects, the model navigation utility may be configured to provide a user with an interface to navigate one or more models, such as models trained by model training engine 208. The interface may be used to select one or more models from a list of models. In examples, the model navigation utility may bundle the selected models into a configuration file, an executable file or the like. The bundled models may additionally comprise information and instructions that provide for installing and/or implementing the bundled models on a computing device. In a particular example, the bundling process may occur programmatically upon confirmation of the selected models. In some aspects, the bundled model data may be made accessible to one or more users and/or computing devices.

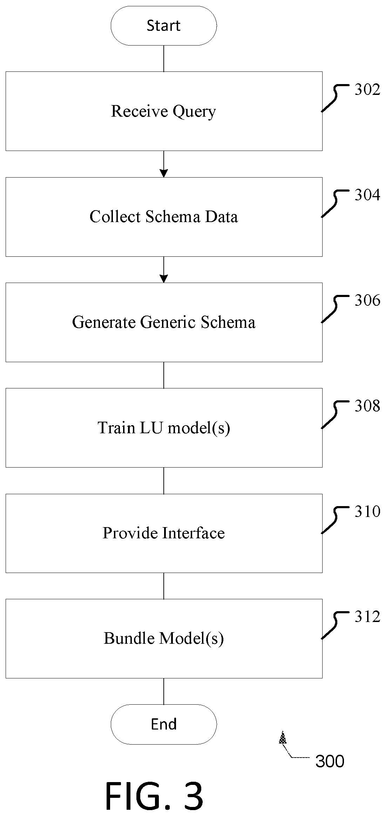

Figure 3 illustrates example methods of configuring generic language understanding models as described herein. In aspects, method 300 may be executed by an exemplary system such as system 100 of Figure 1. In examples, method 300 may be executed on a device comprising at least one processor configured to store and execute operations, programs or instructions. However, method 300 is not limited to such examples. In other examples, method 300 may be performed on an application or service for processing video and/or images. In at least one example, method 300 may be executed (e.g., computer-implemented operations) by one or more components of a distributed network, for instance, web service/distributed network service (e.g. cloud service) to leverage configuring generic language understanding modeling techniques for a language understanding system.

Exemplary method 300 begins at operation 302 where input may be received by a server device. In aspects, the input may be received from a remote computing device or directly from a user. For example, the input may be received from a client device via an API or the input may be received directly via a user interface provided by the server device, such as user interface 202. The input is parsed to identify information associated with language understanding models, schema data and/or other information corresponding to one or more applications and/or scenarios. The identified information may include model data, schema data, domain data, intent data, slot (or entity) data, client data and/or user data. For example, the server device may receive input including the query "Find intents for scheduling a ride." The server device may parse this query to identify a request for vehicular transportation models and/or schema data. The parsed data may be configured into a data request

At operation 304, schema data is collected by the server device. In aspects, one or more components of the server device, such as collection engine 204 may use the parsed query data to generate one or more data requests and collect schema data. For example, the above query (e.g., "Find intents for scheduling a ride.") may be used to generate data requests for models and/or schema data in and/or related the transportation domain. In a particular example, the data requests may include model and/or schema requests for scheduling a ride (e.g., taxi, private car, bus, train, flight, etc.), planning a route, identifying a location, identifying a weather report, purchasing a ticket, scheduling a reminder, etc. In some aspects, the data requests may be used to query or identify one or more data sources comprising one or more portions of the model and/or schema data. For example, the data requests may be transmitted to one or more data sources known to the server device. In another example, the data requests may be broadcasted to a plurality of data sources accessible by the server device. In yet another example, the server device may store or have access to mapping information that indicates a relationship between a data source and data known to be accessible to the data source. The server device may use the data requests to identify in the mapping information one or more data sources. The server device may then transmit specific data requests to only those data sources known (or identified) to have access to the requested data. In such aspects, the server device may receive/collect from the data sources the requested data (e.g., a model for scheduling a taxi, a schema for purchasing a ticket, intent data for booking a taxi, domain data for a 'places' domain, etc.), an indication that such data is available to the server device, and/or information associated with the requested models/schemas (e.g., previous results for queries of the requested models, data related to the generation of those previous results, domain confidence scores, etc.).

At operation 306, a generic schema is generated. In aspects, the server device may access and process the data collected from the data sources using, for example, generalizing engine 206. Processing the collected data includes inserting/retrieving the collected data to/from a data store (e.g., a data file, table, memory, etc.), sorting and/or grouping the collected data by one or more category elements, and/or converting the collected data into low-dimensional representations. In at least one example, the low-dimensional representations are generated using an algorithm, such as a CCA algorithm. In some aspects, the low-dimensional representations may be clustered into coarse or generic schema elements or element categories using calculations or algorithms, such as the *k-*means clustering algorithm. For example, the schema data from a first data source may include the elements "sports player," "coach" and "team rating," and the schema data from a second data source may include the elements "artist," "producer," "song rating" and "album rating." The data from the first and second sources may be converted into vector representations and clustered such that the elements "sports player," "coach," "artist" and "producer" are clustered into a more generic "people" category, and the elements "team rating," "song rating" and "album rating" are clustered into a more generic "ratings" category. The "people" and "ratings" categories may then be used to generate a generic schema comprising the schema elements "people" and "ratings." In some aspects, the generic schema may be mapped to the collected data used to generate the generic schema. For example, "sports player," "coach," "artist" and "producer" may be mapped to the "people" category of the generic schema. Such a mapping may simplify and expedite the process of clustering additional schema data into the generic schema or generating additional generic schemas.

At operation 308, one or more language understanding (LU) models are trained. In aspects, the server device may use the generated generic schema and/or information associated with the generic schema data to train an LU model using, for example, model training engine 208. For instance, the LU model(s) may receive as input a generic schema comprising the coarse schema elements "people" and "ratings;" corresponding mappings to the fine schema elements "sports player," "coach," "artist," "producer," "team rating," "song rating" and "album rating;" and/or previous results and data generated for queries processed by the first and second data sources. In some aspects, the generic schema may be used to train an LU model on all (or substantially all) of the elements of the generic schema and related information. For example, an LU model may be trained using the coarse schema elements "people" and "ratings" and the associated fine schema elements and data. In other aspects, one or more portions of the generic schema may be used to train a plurality of smaller (e.g., comprising fewer elements) models. For example, a first LU model may be trained using the coarse schema element "people" and the associated fine schema elements and data, and a second LU model may be trained using the coarse schema element "people" and the associated fine schema elements and data. In another example, a first LU model may be trained using the intent "book taxi," a second LU model may be trained using the intent "book bus," a third LU model may be trained using the intent "book train," etc.

At operation 310, an interface for browsing the LU model(s) are provided. The server device provides (or cause to be provided) an interface for navigating one or more trained LU models. For example, the interface may provide a list of three models that are accessible via the server device. The three models may include a first model trained using the coarse schema elements "people" and "ratings," a second model trained using the coarse schema element "people," and a third model trained using the coarse schema element "ratings." In one particular aspect, highlighting or selecting for viewing the second model may provide a view of the domain(s), user intent(s), and/or slot(s) associated with the second model. For example, the interface may provide the domains "contacts" and "movies" from the second model. The "contacts" domain may comprise the intents "call" and "send message." The "send message" intent may comprise the slots "contact_name," "message_type," and "message_content." In some aspects, the interface may additionally provide for testing an input against the one or more models. For example, for a selected model and an input utterance, the interface may provide the domains and intents implicated, the slots tagged and/or the slots resolved.

At operation 312, the LU model(s) may be bundled. In aspects, the interface provided by the server device may additionally or alternately provide for selecting one or more LU models for bundling. The selected LU models may be manually or programmatically bundled into a configuration file, an executable file or the like. The bundled models may additionally comprise information and instructions that provide for automatically installing and/or implementing the bundled models on a computing device. For example, a model trained using the coarse schema elements "people" and "ratings" may be selected for bundling via the interface. The corresponding mappings to the fine schema elements, previously generated results and data associated with the model, and/or other installation/implementation instructions may also be added to the bundle. In some aspects, the bundled data may be provided (or otherwise made accessible) to a user or computing device. For example, the interface may additionally provide for executing and installing the bundled data on one or more remote servers. In such an example, the server device may install the same models on each remote server, but may configure one or more of the models to be used differently or to be used with different applications.

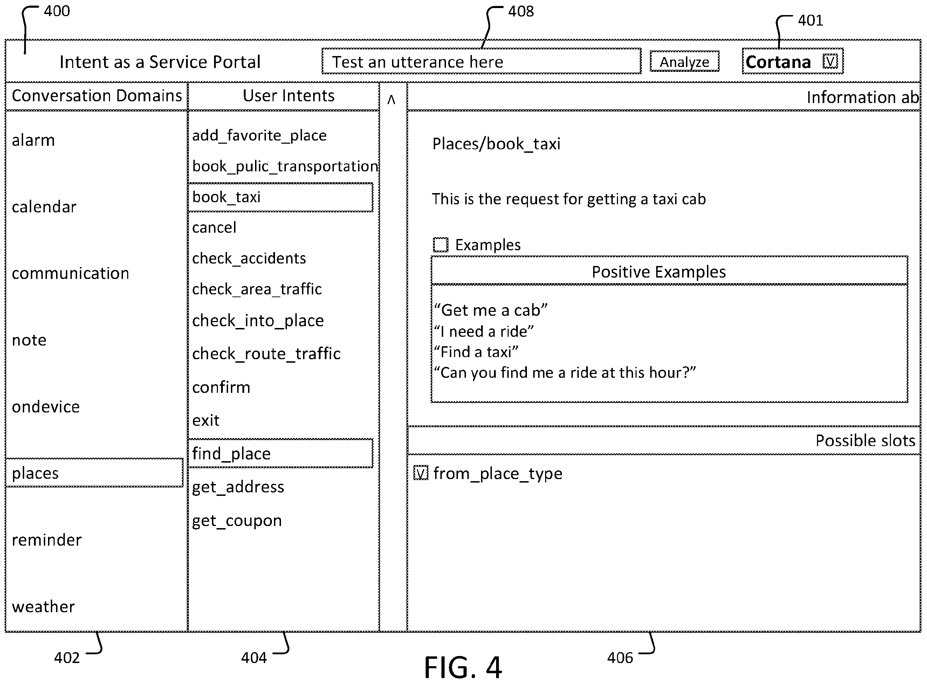

Figure 4 is an exemplary diagram of an interface to interact with language understanding models as described herein. Interface 400 illustrates a view of a schema portal for navigating the elements of a selected language understanding model. Dropdown 401 may provide a list of available models to be navigated and/or bundled. For example, dropdown 401 shows that the "Cortana" model has been selected. Frame 402 provides a list of the domains in the "Conversation" domain of the selected model. As shown, the "places" domain is highlighted. Frame 404 provides a list of the intents in the "places" domain. As shown, the "book_taxi" intent is highlighted. Frame 406 provides information about the currently viewed domain and intent pair. In aspects, the information may include a description of the intent and/or domain, one or more examples of utterances that may invoke the domain/intent pair, exemplary slots to be used with the domain/intent pair, and the like. Text box 408 may provide a utility for testing input against the model. For example, text box 408 may accept an utterance as input and may invoke a utility to evaluate the utterance against a selected domain/intent pair. In another example, the invoked utility may be evaluated against the currently highlighted and/or selected domain/intent pair.

FIGS. 5-8 and the associated descriptions provide a discussion of a variety of operating environments in which aspects of the disclosure may be practiced. However, the devices and systems illustrated and discussed with respect to FIGS. 5-8 are for purposes of example and illustration and are not limiting of a vast number of computing device configurations that may be utilized for practicing aspects of the disclosure, described herein.

FIG. 5 is a block diagram illustrating physical components (e.g., hardware) of a computing device 500 with which aspects of the disclosure may be practiced. The computing device components described below may be suitable for the computing devices described above. In a basic configuration, the computing device 500 may include at least one processing unit 502 and a system memory 504. Depending on the configuration and type of computing device, the system memory 504 may comprise, but is not limited to, volatile storage (e.g., random access memory), non-volatile storage (e.g., read-only memory), flash memory, or any combination of such memories. The system memory 504 may include an operating system 505 and one or more program modules 506 suitable for running unified messaging application 520, such as one or more components in regards to FIG. 3 and, in particular, context component 511, extract component 513, transform component 515, or present component 517. The operating system 505, for example, may be suitable for controlling the operation of the computing device 500. Furthermore, embodiments of the disclosure may be practiced in conjunction with a graphics library, other operating systems, or any other application program and is not limited to any particular application or system. This basic configuration is illustrated in FIG. 5 by those components within a dashed line 508. The computing device 500 may have additional features or functionality. For example, the computing device 500 may also include additional data storage devices (removable and/or non-removable) such as, for example, magnetic disks, optical disks, or tape. Such additional storage is illustrated in FIG. 5 by a removable storage device 509 and a non-removable storage device 510.

As stated above, a number of program modules and data files may be stored in the system memory 504. While executing on the processing unit 502, the program modules 506 (e.g., unified messaging application 520) may perform processes including, but not limited to, the aspects, as described herein. Other program modules that may be used in accordance with aspects of the present disclosure, and in particular for providing a unified messaging platform, may include context component 511, extract component 513, transform component 515, or present component 517, etc.

Furthermore, embodiments of the disclosure may be practiced in an electrical circuit comprising discrete electronic elements, packaged or integrated electronic chips containing logic gates, a circuit utilizing a microprocessor, or on a single chip containing electronic elements or microprocessors. For example, embodiments of the disclosure may be practiced via a system-on-a-chip (SOC) where each or many of the components illustrated in FIG. 5 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to the capability of client to switch protocols may be operated via application-specific logic integrated with other components of the computing device 500 on the single integrated circuit (chip). Embodiments of the disclosure may also be practiced using other technologies capable of performing logical operations such as, for example, AND, OR, and NOT, including but not limited to mechanical, optical, fluidic, and quantum technologies. In addition, embodiments of the disclosure may be practiced within a general purpose computer or in any other circuits or systems.

The computing device 500 may also have one or more input device(s) 512 such as a keyboard, a mouse, a pen, a sound or voice input device, a touch or swipe input device, etc. The output device(s) 514 such as a display, speakers, a printer, etc. may also be included. The aforementioned devices are examples and others may be used. The computing device 500 may include one or more communication connections 516 allowing communications with other computing devices 550. Examples of suitable communication connections 516 include, but are not limited to, radio frequency (RF) transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory 504, the removable storage device 509, and the non-removable storage device 510 are all computer storage media examples (e.g., memory storage). Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 500. Any such computer storage media may be part of the computing device 500. Computer storage media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

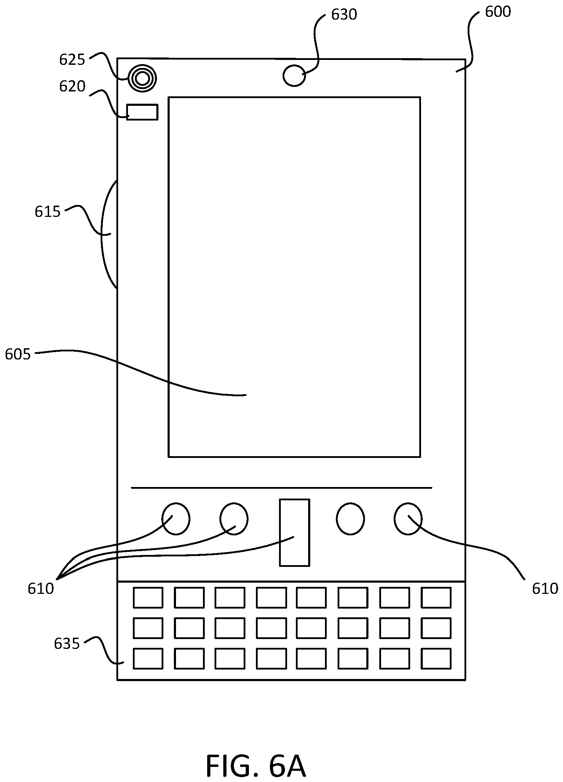

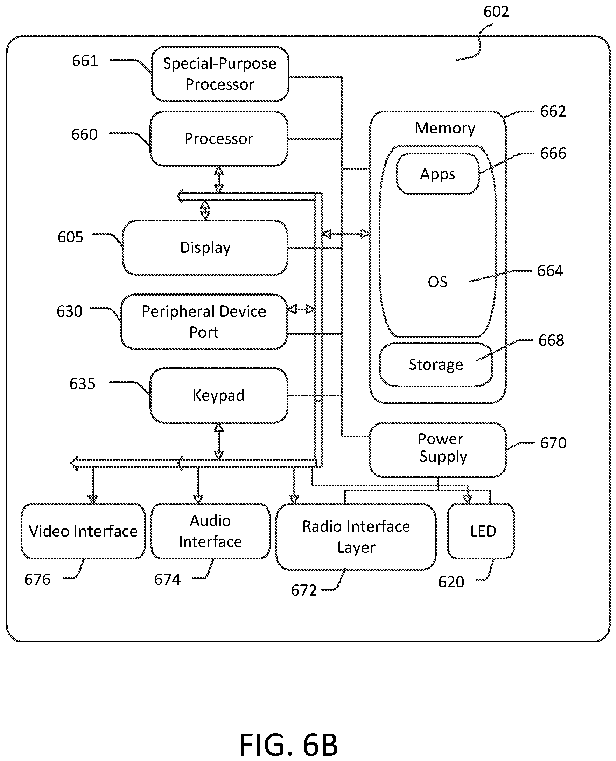

FIGS. 6A and 6B illustrate a mobile computing device 600, for example, a mobile telephone, a smart phone, wearable computer (such as a smart watch), a tablet computer, a laptop computer, and the like, with which embodiments of the disclosure may be practiced. In some aspects, the client may be a mobile computing device. With reference to FIG. 6A, one aspect of a mobile computing device 600 for implementing the aspects is illustrated. In a basic configuration, the mobile computing device 600 is a handheld computer having both input elements and output elements. The mobile computing device 600 typically includes a display 605 and one or more input buttons 610 that allow the user to enter information into the mobile computing device 600. The display 605 of the mobile computing device 600 may also function as an input device (e.g., a touch screen display). If included, an optional side input element 615 allows further user input. The side input element 615 may be a rotary switch, a button, or any other type of manual input element. In alternative aspects, mobile computing device 600 may incorporate more or less input elements. For example, the display 605 may not be a touch screen in some embodiments. In yet another alternative embodiment, the mobile computing device 600 is a portable phone system, such as a cellular phone. The mobile computing device 600 may also include an optional keypad 635. Optional keypad 635 may be a physical keypad or a "soft" keypad generated on the touch screen display. In various embodiments, the output elements include the display 605 for showing a graphical user interface (GUI), a visual indicator 620 (e.g., a light emitting diode), and/or an audio transducer 625 (e.g., a speaker). In some aspects, the mobile computing device 600 incorporates a vibration transducer for providing the user with tactile feedback. In yet another aspect, the mobile computing device 600 incorporates input and/or output ports, such as an audio input (e.g., a microphone jack), an audio output (e.g., a headphone jack), and a video output (e.g., a HDMI port) for sending signals to or receiving signals from an external device.

FIG. 6B is a block diagram illustrating the architecture of one aspect of a mobile computing device. That is, the mobile computing device 600 can incorporate a system (e.g., an architecture) 602 to implement some aspects. In one embodiment, the system 602 is implemented as a "smart phone" capable of running one or more applications (e.g., browser, e-mail, calendaring, contact managers, messaging clients, games, and media clients/players). In some aspects, the system 602 is integrated as a computing device, such as an integrated personal digital assistant (PDA) and wireless phone.

One or more application programs 666 may be loaded into the memory 662 and run on or in association with the operating system 664. Examples of the application programs include phone dialer programs, e-mail programs, personal information management (PIM) programs, word processing programs, spreadsheet programs, Internet browser programs, messaging programs, and so forth. The system 602 also includes a non-volatile storage area 668 within the memory 662. The non-volatile storage area 668 may be used to store persistent information that should not be lost if the system 602 is powered down. The application programs 666 may use and store information in the non-volatile storage area 668, such as e-mail or other messages used by an e-mail application, and the like. A synchronization application (not shown) also resides on the system 602 and is programmed to interact with a corresponding synchronization application resident on a host computer to keep the information stored in the non-volatile storage area 668 synchronized with corresponding information stored at the host computer. As should be appreciated, other applications may be loaded into the memory 662 and run on the mobile computing device 600, including the instructions for providing a unified messaging platform as described herein (e.g., search engine, extractor module, relevancy ranking module, answer scoring module, etc.).

The system 602 has a power supply 670, which may be implemented as one or more batteries. The power supply 670 might further include an external power source, such as an AC adapter or a powered docking cradle that supplements or recharges the batteries.

The system 602 may also include a radio interface layer 672 that performs the function of transmitting and receiving radio frequency communications. The radio interface layer 672 facilitates wireless connectivity between the system 602 and the "outside world," via a communications carrier or service provider. Transmissions to and from the radio interface layer 672 are conducted under control of the operating system 664. In other words, communications received by the radio interface layer 672 may be disseminated to the application programs 666 via the operating system 664, and vice versa.

The visual indicator 620 may be used to provide visual notifications, and/or an audio interface 674 may be used for producing audible notifications via the audio transducer 625. In the illustrated embodiment, the visual indicator 620 is a light emitting diode (LED) and the audio transducer 625 is a speaker. These devices may be directly coupled to the power supply 670 so that when activated, they remain on for a duration dictated by the notification mechanism even though the processor 660 and other components might shut down for conserving battery power. The LED may be programmed to remain on indefinitely until the user takes action to indicate the powered-on status of the device. The audio interface 674 is used to provide audible signals to and receive audible signals from the user. For example, in addition to being coupled to the audio transducer 625, the audio interface 674 may also be coupled to a microphone to receive audible input, such as to facilitate a telephone conversation. In accordance with embodiments of the present disclosure, the microphone may also serve as an audio sensor to facilitate control of notifications, as will be described below. The system 602 may further include a video interface 676 that enables an operation of an on-board camera 630 to record still images, video stream, and the like.

A mobile computing device 600 implementing the system 602 may have additional features or functionality. For example, the mobile computing device 600 may also include additional data storage devices (removable and/or non-removable) such as, magnetic disks, optical disks, or tape. Such additional storage is illustrated in FIG. 6B by the non-volatile storage area 668.

Data/information generated or captured by the mobile computing device 600 and stored via the system 602 may be stored locally on the mobile computing device 600, as described above, or the data may be stored on any number of storage media that may be accessed by the device via the radio interface layer 672 or via a wired connection between the mobile computing device 600 and a separate computing device associated with the mobile computing device 600, for example, a server computer in a distributed computing network, such as the Internet. As should be appreciated such data/information may be accessed via the mobile computing device 600 via the radio interface layer 672 or via a distributed computing network. Similarly, such data/information may be readily transferred between computing devices for storage and use according to well-known data/information transfer and storage means, including electronic mail and collaborative data/information sharing systems.

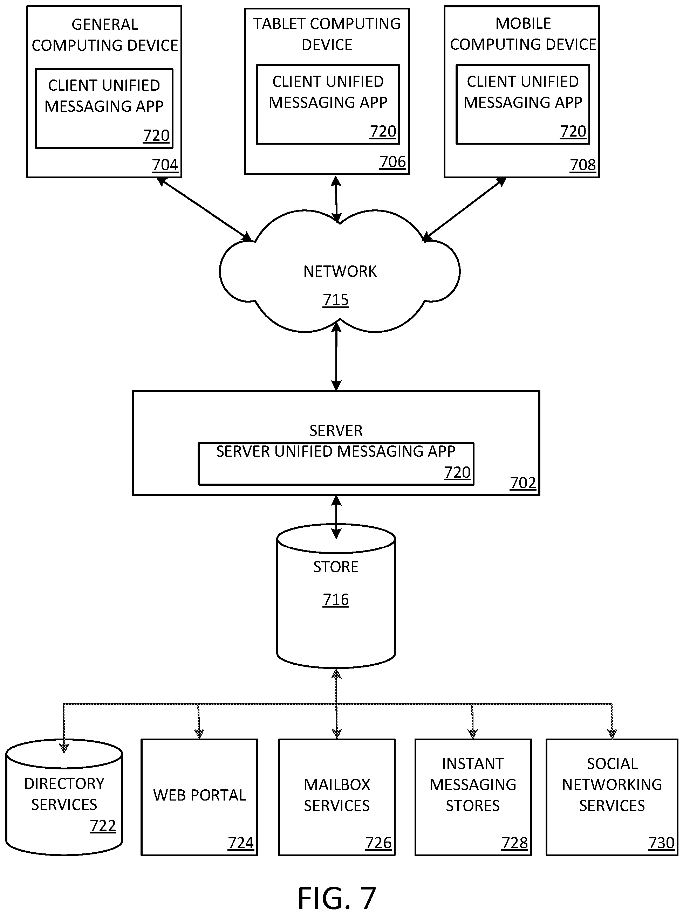

FIG. 7 illustrates one aspect of the architecture of a system for processing data received at a computing system from a remote source, such as a personal computer 704, tablet computing device 706, or mobile computing device 708, as described above. Content displayed at server device 702 may be stored in different communication channels or other storage types. For example, various documents may be stored using a directory service 722, a web portal 724, a mailbox service 726, an instant messaging store 728, or a social networking site 730. The unified messaging application 720 may be employed by a client that communicates with server device 702, and/or the unified messaging application 720 may be employed by server device 702. The server device 702 may provide data to and from a client computing device such as a personal computer 704, a tablet computing device 706 and/or a mobile computing device 708 (e.g., a smart phone) through a network 715. By way of example, the computer system described above with respect to FIGS. 1-6 may be embodied in a personal computer 704, a tablet computing device 706 and/or a mobile computing device 708 (e.g., a smart phone). Any of these embodiments of the computing devices may obtain content from the store 716, in addition to receiving graphical data useable to be either pre-processed at a graphic-originating system, or post-processed at a receiving computing system.

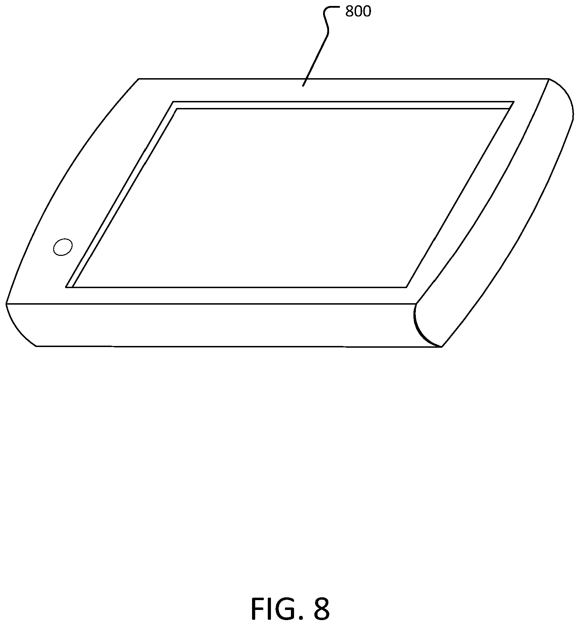

Figure 8 illustrates an exemplary tablet computing device 800 that may execute one or more aspects disclosed herein. In addition, the aspects and functionalities described herein may operate over distributed systems (e.g., cloud-based computing systems), where application functionality, memory, data storage and retrieval and various processing functions may be operated remotely from each other over a distributed computing network, such as the Internet or an intranet. User interfaces and information of various types may be displayed via on-board computing device displays or via remote display units associated with one or more computing devices. For example user interfaces and information of various types may be displayed and interacted with on a wall surface onto which user interfaces and information of various types are projected. Interaction with the multitude of computing systems with which embodiments of the invention may be practiced include, keystroke entry, touch screen entry, voice or other audio entry, gesture entry where an associated computing device is equipped with detection (e.g., camera) functionality for capturing and interpreting user gestures for controlling the functionality of the computing device, and the like.

Aspects of the present disclosure, for example, are described above with reference to block diagrams and/or operational illustrations of methods, systems, and computer program products according to aspects of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the broader aspects of the general inventive concept embodied in this application that do not depart from the broader scope of the claims.

## Claims

1. A computer-implemented method (300) for configuring one or more generic language understanding models, comprising:
receiving (302), at a server device (106A), a user query;
parsing the user query to identify information corresponding to one or more applications and/or scenarios for the one or more generic language understanding models;
collecting (304) schemas associated with the one or more generic language understanding models using the identified information;
generating (306) a generic schema using the collected schemas;
training (308) the one or more generic language understanding models using at least a portion of the generic schema; and
providing (310) an interface (202) to navigate the one or more trained generic language understanding models, the interface (202) providing for selection of one of the one or more trained generic language understanding models for bundling the one or more models into a file;
wherein generating (306) the generic schema comprises:
organizing the collected schemas by one or more categories;
converting the organized schemas elements into multi-dimensional representations of the schemas;
clustering the multi-dimensional representations into generic schema elements associated each with a generic label; and
mapping the clustered generic schema elements to the generic schema.

2. The method (300) of claim 1, wherein collecting (304) the schemas comprises:
generating one or more data requests using the information;
transmitting the one or more data requests to one or more data sources; and
receiving the schemas associated with the one or more data requests from the one or more data sources.

3. The method (300) of claim 2, wherein generating one or more data requests comprises:
identifying, on the server device, mapping information, the mapping information indicating a relationship between the one or more data sources and schemas known to be accessible by the one or more data sources; and
based on the mapping information, generating one or more specific data requests for the schemas known by the one or more data sources.

4. The method (300) of claim 3, wherein training (308) the one or more generic language understanding models comprises providing as input to the one or more generic language understanding models at least one of: the generic schema, data used to generate the generic schema, and the received schemas.

5. The method (300) of claim 1, wherein converting the organized schemas comprises applying canonical correlation analysis, CCA, to the organized schemas.

6. The method (300) of claim 1, wherein clustering the multi-dimensional representations comprises applying a k-means clustering algorithm to the multi-dimensional representations.

7. The method (300) of claim 1, wherein clustering the multi-dimensional representations comprises:
identifying one or more terms in one or more multi-dimensional representations;
determining a generic term corresponding to the one or more terms; and
designating the generic term as a generic label for a generic schema element.

8. The method (300) of claim 1, wherein the interface further provides for bundling (312) at least one of the one or more trained generic language understanding models.

9. The method (300) of claim 8, wherein bundling (312) the one or more trained generic language understanding models comprises:
adding the one or more trained generic language understanding models to a bundle; and
adding instructions for automatically implementing the one or more trained generic language understanding models to the bundle.

10. The method (300) of claim 1, wherein training (308) one or more generic language understanding models comprises providing a first portion of the generic schema to a first generic language understanding model and a second portion of the generic schema to a second generic language understanding model.

11. The method (300) of claim 10, wherein the first generic language understanding model uses the first portion of the generic schema to determine a first set of predictive relationships and the second generic language understanding model uses the second portion of the generic schema to determine a second set of predictive relationships.

12. A computer-readable medium (762) storing computer executable instructions that when executed cause a computing system (100) to perform a method of any of the preceding claims.

13. A computer program comprising instructions which when executed by a computer implement the method of any of claims 1 to 11.

14. A system (100) comprising:
at least one processor (760); and
memory (762) coupled to the at least one processor (760), the memory (762) comprising computer executable instructions that, when executed by the at least one processor (760), perform a method according to any of claims 1 to 11.

## Patentansprüche

1. Computerimplementiertes Verfahren (300) zum Konfigurieren eines oder mehrerer generischer Sprachverständnismodelle, umfassend:
Empfangen (302) einer Benutzerabfrage an einer Servervorrichtung (106A);
Analysieren der Benutzerabfrage, um Informationen zu identifizieren, die einer oder mehreren Anwendungen und/oder Szenarien für das eine oder die mehreren generischen Sprachverständnismodelle entsprechen;
Sammeln (304) von Schemata, die mit dem einen oder den mehreren generischen Sprachverständnismodellen assoziiert sind, unter Verwendung der identifizierten Informationen;
Erstellen (306) eines generischen Schemas unter Verwendung der gesammelten Schemata;
Trainieren (308) des einen oder der mehreren generischen Sprachverständnismodelle unter Verwendung mindestens eines Teils des generischen Schemas; und
Bereitstellen (310) einer Schnittstelle (202) zum Navigieren durch das eine oder die mehreren trainierten generischen Sprachverständnismodelle, wobei die Schnittstelle (202) die Auswahl eines des einen oder der mehreren trainierten generischen Sprachverständnismodelle zum Bündeln des einen oder der mehreren Modelle in eine Datei ermöglicht;
wobei das Erstellen (306) des generischen Schemas umfasst:
Organisieren der gesammelten Schemata nach einer oder mehreren Kategorien;
Konvertieren der organisierten Schemaelemente in mehrdimensionale Darstellungen der Schemata;
Clustern der mehrdimensionalen Darstellungen in generische Schemaelemente, die jeweils mit einer generischen Bezeichnung assoziiert sind; und
Zuordnen der geclusterten generischen Schemaelemente zu dem generischen Schema.

2. Verfahren (300) nach Anspruch 1, wobei das Sammeln (304) der Schemata umfasst:
Erstellen einer oder mehrerer Datenanforderungen unter Verwendung der Informationen;
Übertragen der einen oder der mehreren Datenanforderungen an eine oder mehrere Datenquellen; und
Empfangen der mit der einen oder den mehreren Datenanforderungen assoziierten Schemata von der einen oder den mehreren Datenquellen.

3. Verfahren (300) nach Anspruch 2, wobei das Erstellen einer oder mehrerer Datenanforderungen umfasst:
Identifizieren von Zuordnungsinformationen auf der Servervorrichtung, wobei die Zuordnungsinformationen eine Beziehung zwischen der einen oder den mehreren Datenquellen und Schemata angeben, von denen bekannt ist, dass sie für die eine oder die mehreren Datenquellen zugänglich sind; und
basierend auf den Zuordnungsinformationen Erstellen einer oder mehrerer spezifischer Datenanforderungen für die Schemata, die der einen oder den mehreren Datenquellen bekannt sind.

4. Verfahren (300) nach Anspruch 3, wobei das Trainieren (308) des einen oder der mehreren generischen Sprachverständnismodelle das Bereitstellen mindestens eines von dem generischen Schema, zum Erstellen des generischen Schemas verwendeten Daten und den empfangenen Schemata als Eingabe in das eine oder die mehreren generischen Sprachverständnismodelle umfasst.

5. Verfahren (300) nach Anspruch 1, wobei das Konvertieren der organisierten Schemata das Anwenden einer kanonischen Korrelationsanalyse, CCA, auf die organisierten Schemata umfasst.

6. Verfahren (300) nach Anspruch 1, wobei das Clustern der mehrdimensionalen Darstellungen das Anwenden eines k-Means-Clustering-Algorithmus auf die mehrdimensionalen Darstellungen umfasst.

7. Verfahren (300) nach Anspruch 1, wobei das Clustern der mehrdimensionalen Darstellungen umfasst:
Identifizieren eines oder mehrerer Begriffe in einer oder mehreren mehrdimensionalen Darstellungen;
Bestimmen eines generischen Begriffs, der dem einen oder den mehreren Begriffen entspricht; und
Festlegen des generischen Begriffs als generische Bezeichnung für ein generisches Schemaelement.

8. Verfahren (300) nach Anspruch 1, wobei die Schnittstelle ferner das Bündeln (312) mindestens eines des einen oder der mehreren trainierten generischen Sprachverständnismodelle ermöglicht.

9. Verfahren (300) nach Anspruch 8, wobei das Bündeln (312) des einen oder der mehreren trainierten generischen Sprachverständnismodelle umfasst:
Hinzufügen des einen oder der mehreren trainierten generischen Sprachverständnismodelle zu einem Bündel; und
Hinzufügen von Anweisungen zum automatischen Implementieren des einen oder der mehreren trainierten generischen Sprachverständnismodelle zu dem Bündel.

10. Verfahren (300) nach Anspruch 1, wobei das Trainieren (308) eines oder mehrerer generischer Sprachverständnismodelle das Bereitstellen eines ersten Teils des generischen Schemas für ein erstes generisches Sprachverständnismodell und eines zweiten Teils des generischen Schemas für ein zweites generisches Sprachverständnismodell umfasst.

11. Verfahren (300) nach Anspruch 10, wobei das erste generische Sprachverständnismodell den ersten Teil des generischen Schemas verwendet, um einen ersten Satz prädiktiver Beziehungen zu bestimmen, und das zweite generische Sprachverständnismodell den zweiten Teil des generischen Schemas verwendet, um einen zweiten Satz prädiktiver Beziehungen zu bestimmen.

12. Computerlesbares Medium (762), das computerausführbare Anweisungen speichert, die bei Ausführung ein Computersystem (100) zum Durchführen eines Verfahrens nach einem der vorhergehenden Ansprüche veranlassen.

13. Computerprogramm, umfassend Anweisungen, die bei Ausführung durch einen Computer das Verfahren nach einem der Ansprüche 1 bis 11 implementieren.

14. System (100), umfassend:
mindestens einen Prozessor (760); und
Speicher (762), der mit dem mindestens einen Prozessor (760) gekoppelt ist, wobei der Speicher (762) computerausführbare Anweisungen umfasst, die bei Ausführung durch den mindestens einen Prozessor (760) ein Verfahren nach einem der Ansprüche 1 bis 11 durchführen.

## Revendications

1. Procédé mis en oeuvre par ordinateur (300) pour configurer un ou plusieurs modèles de compréhension de langage génériques, comprenant :
la réception (302), au niveau d'un dispositif serveur (106A), d'une requête d'utilisateur ;
l'analyse de la requête d'utilisateur pour identifier des informations correspondant à une ou plusieurs applications et/ou un ou plusieurs scénarios pour le ou les modèles de compréhension de langage génériques ;
la collecte (304) de schémas associés au ou aux modèles de compréhension de langage génériques à l'aide des informations identifiées ;
la génération (306) d'un schéma générique à l'aide des schémas collectés ;
l'entraînement (308) du ou des modèles de compréhension de langage génériques en utilisant au moins une partie du schéma générique ; et
la fourniture (310) d'une interface (202) pour naviguer dans le ou les modèles de compréhension de langage génériques entraînés, l'interface (202) permettant la sélection d'un modèle parmi le ou les modèles de compréhension de langage génériques entraînés pour regrouper le ou les modèles dans un fichier ;
dans lequel la génération (306) du schéma générique comprend :
l'organisation des schémas collectés par une ou plusieurs catégories ;
la conversion des éléments de schémas organisés en représentations multidimensionnelles des schémas ;
l'agrégation des représentations multidimensionnelles en éléments de schéma générique associés chacun à une étiquette générique ; et
le mappage des éléments de schéma générique agrégés au schéma générique.

2. Procédé (300) selon la revendication 1, dans lequel la collecte (304) des schémas comprend :
la génération d'une ou de plusieurs demandes de données à l'aide des informations ;
la transmission de la ou des demandes de données à une ou plusieurs sources de données ; et
la réception des schémas associés à la ou aux demandes de données provenant de la ou des sources de données.

3. Procédé (300) selon la revendication 2, dans lequel la génération d'une ou plusieurs requêtes de données comprend :
l'identification, sur le dispositif serveur, d'informations de mappage, les informations de mappage indiquant une relation entre la ou les sources de données et des schémas connus pour être accessibles par la ou les sources de données ; et
sur la base des informations de mappage, la génération d'une ou de plusieurs demandes de données spécifiques pour les schémas connus de la ou des sources de données.

4. Procédé (300) selon la revendication 3, dans lequel l'entraînement (308) du ou des modèles de compréhension de langage génériques comprend la fourniture, comme entrée au ou aux modèles de compréhension de langage génériques, d'au moins l'un des éléments suivants : le schéma générique, les données utilisées pour générer le schéma générique, et les schémas reçus.

5. Procédé (300) selon la revendication 1, dans lequel la conversion des schémas organisés comprend l'application d'une analyse de corrélation canonique, CCA, aux schémas organisés.

6. Procédé (300) selon la revendication 1, dans lequel l'agrégation des représentations multidimensionnelles comprend l'application d'un algorithme d'agrégation à k moyennes aux représentations multidimensionnelles.

7. Procédé (300) selon la revendication 1, dans lequel l'agrégation des représentations multidimensionnelles comprend :
l'identification d'un ou de plusieurs termes dans une ou plusieurs représentations multidimensionnelles ;
la détermination d'un terme générique correspondant au ou aux termes ; et
la désignation du terme générique comme étiquette générique pour un élément de schéma générique.

8. Procédé (300) selon la revendication 1, dans lequel l'interface permet en outre de regrouper (312) au moins un modèle du ou des modèles de compréhension de langage génériques entraînés.

9. Procédé (300) selon la revendication 8, dans lequel le regroupement (312) du ou des modèles de compréhension de langage génériques entraînés comprend :
l'ajout du ou des modèles de compréhension de langage génériques entraînés à un groupe ; et
l'ajout d'instructions pour mettre en oeuvre automatiquement le ou les modèles de compréhension de langage génériques entraînés sur le groupe.

10. Procédé (300) selon la revendication 1, dans lequel l'entraînement (308) d'un ou plusieurs modèles de compréhension de langage génériques comprend la fourniture d'une première partie du schéma générique à un premier modèle de compréhension de langage générique et d'une seconde partie du schéma générique à un second modèle de compréhension de langage générique.

11. Procédé (300) selon la revendication 10, dans lequel le premier modèle de compréhension de langage générique utilise la première partie du schéma générique pour déterminer un premier ensemble de relations prédictives et le second modèle de compréhension de langage générique utilise la seconde partie du schéma générique pour déterminer un second ensemble de relations prédictives.

12. Support lisible par ordinateur (762) stockant des instructions exécutables par ordinateur qui, lorsqu'elles sont exécutées, amènent un système informatique (100) à exécuter un procédé selon l'une quelconque des revendications précédentes.

13. Programme informatique comprenant des instructions qui, lorsqu'elles sont exécutées par un ordinateur, mettent en oeuvre le procédé selon l'une quelconque des revendications 1 à 11.

14. Système (100) comprenant :
au moins un processeur (760) ; et
une mémoire (762) couplée à l'au moins un processeur (760), la mémoire (762) comprenant des instructions exécutables par ordinateur qui, lorsqu'elles sont exécutées par l'au moins un processeur (760), exécutent un procédé selon l'une quelconque des revendications 1 à 11.
